# EUROPÄISCHE PATENTSCHRIFT

(11) **EP 3 463 972 B1**
(45) Veröffentlichungstag und Bekanntmachung des Hinweises auf die Patenterteilung: **30.09.2020**
(21) Anmeldenummer: 17725257.4
(22) Anmeldetag: 23.05.2017
(51) Int. Cl.: B60N 2/58

(54) **KEDER, SITZBEZUG UND SITZ MIT EINEM SITZBEZUG**
EDGE STRIP, SEAT COVER, AND SEAT COMPRISING A SEAT COVER
BOURRELET, REVÊTEMENT DE SIÈGE ET SIÈGE POURVU D'UN REVÊTEMENT DE SIÈGE

(30) Priorität: 24.05.2016 DE 102016209034; 17.06.2016 DE 102016210873
(43) Veröffentlichungstag der Anmeldung: 10.04.2019
(73) Patentinhaber: Adient Luxembourg Holding S.à r.l., 1855 Luxembourg (LU)
(72) Erfinder: HENNIG, Lars, 42799 Leichlingen (DE); HERING, Michelle, 44225 Dortmund (DE); SCHAETZMUELLER, Anja, 51789 Lindlar (DE)
(74) Vertreter: Liedtke & Partner Patentanwälte
(86) Internationale Anmeldenummer: PCT/EP2017/062419
(87) Internationale Veröffentlichungsnummer: WO 2017/202850

(56) Entgegenhaltungen:
- EP-A1- 2 422 638
- EP-A1- 2 979 569
- FR-A1- 3 010 012
- US-A- 5 005 242
- US-A1- 2012 291 237

## Beschreibung

Die Erfindung betrifft einen Sitz, insbesondere einen Fahrzeugsitz.

Üblicherweise ist ein Sitz, wie beispielsweise ein Fahrzeugsitz, mit einem Sitzbezug versehen. Darüber hinaus ist es bekannt, den Sitzbezug lösbar am Sitz zu befestigen, um den Sitzbezug beispielsweise zu entfernen oder auszutauschen. Hierzu ist es beispielsweise bekannt, den Sitzbezug und korrespondierend den Sitz oberflächenseitig mit Befestigungsmitteln, wie beispielsweise einem Klettband und gegenüberliegend einem Flauschband, zu versehen.

Beispielsweise ist es aus der FR 2 781 733 B1 bekannt, ein Klettband und ein Flauschband auf den Sitzbezug bzw. den Sitz oberflächenseitig aufzubringen. Durch eine solche Klettverbindung kann der Sitzbezug einfach vom Sitz separiert und erneut wieder an diesem befestigt werden.

Aus der EP 0 988 179 B1 ist ein Keder mit einer lichtleitenden Seele bekannt, der zur Befestigung von einer Folie umhüllt ist, deren Enden eine Nähfahne ausbilden.

Des Weiteren sind aus FR 3 010 012 A1, US 2012/291 237 A1, US 5 005 242 A, EP 2 979 569 A1 und EP 2 422 638 A1 Halteelemente zur Befestigung eines Bezugs an einem Sitzpolster bekannt.

Der Erfindung liegt die Aufgabe zu Grunde, einen Sitz mit einem Sitzbezug anzugeben.

Die Aufgabe wird erfindungsgemäß mit einem Sitz gelöst, welcher die in Anspruch 1 angegebenen Merkmalen aufweist.

Ein erfindungsgemäßer Sitz, insbesondere Fahrzeugsitz, umfasst ein Sitzpolster, einen am Sitzpolster befestigten unteren Sitzbezug und einen oberen Sitzbezug, welcher auf dem unteren Sitzbezug lösbar befestigbar ist. Dabei ist einer der Sitzbezüge mit zumindest einem Keder versehen, welcher eine Kederseele umfasst, die von einem Befestigungsmaterial umgeben ist, wobei der andere Sitzbezug mit einem Haltematerial versehen ist, in welches das Befestigungsmaterial des Keders im verbundenen Zustand haltend eingreift.

Durch die Wahl eines bestimmten Sitzbezuges, insbesondere dessen Material, kann hierbei ein individueller Sitz geschaffen werden. Insbesondere können hierdurch unterschiedlich dekorative Sitze oder Sitze mit unterschiedlichen Sitzeigenschaften mit Sitzheizung und/oder -lüftung und/oder mit Raumklimazonen geschaffen werden.

Gemäß einer Ausgestaltung der Erfindung ist die Kederseele von dem Befestigungsmaterial ummantelt. Das Befestigungsmaterial ist beispielsweise als ein Klettmaterial ausgebildet.

Der Keder ist hierbei als ein Befestigungs- und/oder Randverstärkungskeder ausgebildet und ermöglicht durch Einbringung in einen Sitzbezug gegenüber herkömmlich aufgebrachten Verbindungsmitteln, wie z. B. aufgeklebten Klettbändern, einen optisch anmutenden, insbesondere glatten oder faltenfreien Sitzbezug.

Gemäß einer Ausgestaltung der Erfindung ist das Klettmaterial ein Hakenmaterial, insbesondere eine Haken-, Pilzkopf- oder Ösen-Band/- Ware. Alternativ dazu kann das Klettmaterial auch als ein Flauschmaterial ausgebildet sein.

Eine Befestigung des Befestigungsmaterials an der Kederseele kann mittels Stoffschluss erfolgen. Beispielsweise ist das Befestigungsmaterial mit der Kederseele verklebt oder verschweißt. Das Befestigungsmaterial kann dabei auch selbstklebend ausgebildet sein, beispielsweise mittels einer Haftklebstoffbeschichtung auf einer der Kederseele zugewandten Seite, wobei eine Scherkraft der Haftklebstoffbeschichtung größer ist als eine Scherkraft der lösbaren Verbindung zwischen dem Befestigungsmaterial und einem am Sitzbezug angeordneten Haftmaterial.

Gemäß einer weiteren Ausgestaltung der Erfindung ist zwischen dem Befestigungsmaterial und der Kederseele ein Bezugsmaterial angeordnet. Das Bezugsmaterial dient einerseits einer Kaschierung der Kederseele. Andererseits dient das Bezugsmaterial einer Befestigung des Keders beispielsweise an einem Sitzteil, insbesondere einer Sitzfläche oder an einem unteren Sitzbezug. Das Bezugsmaterial ummantelt dabei die Kederseele und wird an dessen Enden unter Ausbildung einer Kederfahne verklebt oder vernäht. Das Befestigungsmaterial ist hierbei mit dem Bezugsmaterial verbunden und ummantelt das die Kederseele ummantelnde Bezugsmaterial. Das Befestigungsmaterial kann dabei mit dem Bezugsmaterial stoffschlüssig verbunden sein. Insbesondere ist das Befestigungsmaterial mit dem Bezugsmaterial verklebt oder verschweißt. Alternativ kann das Befestigungsmaterial auch mit dem Bezugsmaterial vernäht sein.

Alternativ ist es möglich, dass das Befestigungsmaterial die Kederseele unmittelbar ummantelt und an dessen Enden eine Kederfahne ausbildet.

Vorzugsweise ist die Kederseele aus einem elastischen Material, insbesondere aus Kunststoff oder Gummi, gebildet. Dies ermöglicht einen angenehmen Sitzkomfort für eine auf dem Sitzbezug sitzende Person. Des Weiteren ist das Bezugsmaterial aus Kunststoff, z. B. Polypropylen, oder einem Naturmaterial, gebildet. Das Bezugsmaterial ist insbesondere fester als die Kederseele ausgebildet.

Gemäß einer Ausgestaltung der Erfindung ist für den Sitzbezug eine Mehrzahl von Bezugsteilen vorgesehen, wobei im Bereich von mindestens zwei miteinander verbundenen Bezugsteilen wenigstens ein Keder vorgesehen ist.

Mittels Einbringen des Keders wird ein optisch anmutender, insbesondere glatter oder faltenfreier, Sitzbezug, ermöglicht, welcher auf einfache Art und Weise mit dem Sitz verbunden und somit ausgetauscht werden kann.

Gemäß einer Ausgestaltung des Sitzes ist das Haltematerial ein Flauschmaterial, welches mit einem als Hakenmaterial ausgebildeten Klettmaterials eine lösbare Verbindung herstellt. Alternativ kann das Haltematerial auch ein Hakenmaterial sein, wobei das Befestigungsmaterial ein Schlaufenmaterial oder Flauschmaterial ist. Das Haltematerial kann mit dem Sitzbezug stoffschlüssig verbunden sein. Beispielsweise ist das Haltematerial mit Sitzbezug verklebt oder verschweißt. Alternativ dazu kann das Haltematerial auch mit dem Sitzbezug vernäht sein.

Ausführungsbeispiele der Erfindung werden anhand von Zeichnungen näher erläutert. Dabei zeigen:
- Figur 1: schematisch ein Ausführungsbeispiel für einen Keder gemäß dem Stand der Technik,
- Figur 2: schematisch ein Ausführungsbeispiel für einen lösbaren Sitzbezug mit einem oberflächenseitig aufgebrachten Verbindungsmittel gemäß dem Stand der Technik,
- Figur 3A, 3D: schematisch ein Ausführungsbeispiel für einen Keder,
- Figuren 3B-3C: schematisch verschiedene Ausführungsbeispiele für einen Sitzbezug mit einem Keder,
- Figur 4: schematisch eine Draufsicht auf einen unteren Sitzbezug mit einem Keder, und
- Figur 5: schematisch ein Ausführungsbeispiel für einen oberen, abnehmbaren oder lösbaren Sitzbezug.

Einander entsprechende Teile sind in allen Figuren mit den gleichen Bezugszeichen versehen.

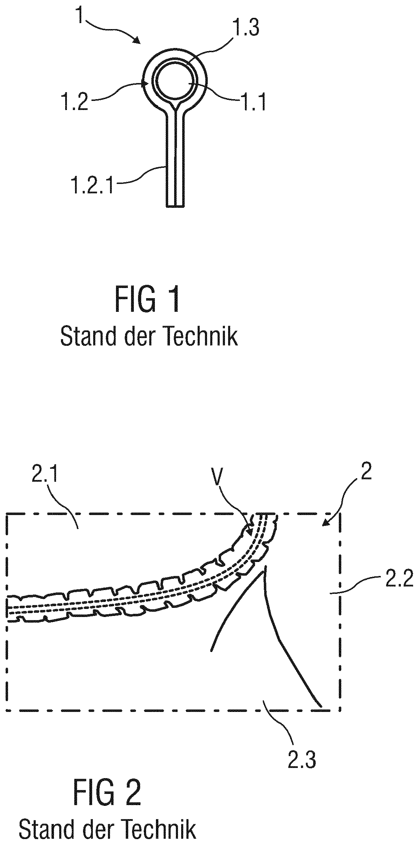

**Figur 1** zeigt schematisch im Schnitt ein Ausführungsbeispiel für einen Keder 1 gemäß dem Stand der Technik. Keder 1 werden im Automobilbereich eingesetzt. Der Keder 1 dient im Allgemeinen zur Abdeckung von beispielsweise sichtbaren Fugen zwischen zwei Teilen, wie zum Beispiel zwischen Sitzbezugsteilen oder Teilen eines Verkleidungsteils. Auch wird der Keder 1 im Übergangsbereich von Teilen eingesetzt, um beispielsweise einen fließenden Übergang ohne den störenden Eindruck von Fugen zu ermöglichen. Mittels des Keder 1 wird somit das ästhetische Erscheinungsbild einer Komponente, wie die eines Sitzes oder Sitzbezuges verschönert.

Der Keder 1 umfasst eine Kederseele 1.1 und ein diese umgebendes Bezugsmaterial 1.2 auf. Das Bezugsmaterial 1.2 umgibt die Kederseele 1.1 vollständig und steht in Form von Kederfahnen 1.2.1 ab. Die Kederseele 1.1 ist beispielsweise aus einem elastischen Material, beispielsweise aus Kunststoff oder Kautschuk. Das Bezugsmaterial 1.2 und die Kederfahnen 1.2.1 sind einteilig ausgebildet. Beispielsweise sind das Bezugsmaterial 1.2 und die Kederfahnen 1.2.1 aus einem Dekormaterial, insbesondere aus einem Kunststoff oder einem Naturmaterial, beispielsweise aus Polypropylen, Kunststoff- oder Echtleder oder einem anderen Textil, gebildet.

Das Bezugsmaterial 1.2 ummantelt oder umschlingt im gezeigten Ausführungsbeispiel die Kederseele 1.1. Die freien Enden des Bezugsmaterials 1.2 stehen von der umschlungenen Kederseele 1.1 in Form der Kederfahnen 1.2.1 ab.

Der Keder 1 kann einstückig, als ein in einem Extrusions- oder Spritzgießverfahren hergestelltes Element sein. Alternativ können das Bezugsmaterial 1.2 mit den Kederfahnen 1.2.1 und die Kederseele 1.1 separat gefertigt sein, wobei die Kederseele 1.1 in einer Kederaufnahme 1.3 des Bezugsmaterials 1.2 einführbar und dort anordenbar ist.

**Figur 2** zeigt schematisch ein Ausführungsbeispiel für einen lösbaren Sitzbezug 2 mit einem oberflächenseitig aufgebrachten Verbindungsmittel V gemäß dem Stand der Technik. Der Sitzbezug 2 umfasst mehrere Bezugsteile 2.1 bis 2.3. Das Verbindungsmittel V ist dabei im Übergangsbereich B zwischen zwei angrenzenden Bezugsteilen 2.1 bis 2.3 am Sitzbezug 2 angeordnet. Im Ausführungsbeispiel ist das Verbindungsmittel V als ein aufgeklebtes Klettband ausgebildet.

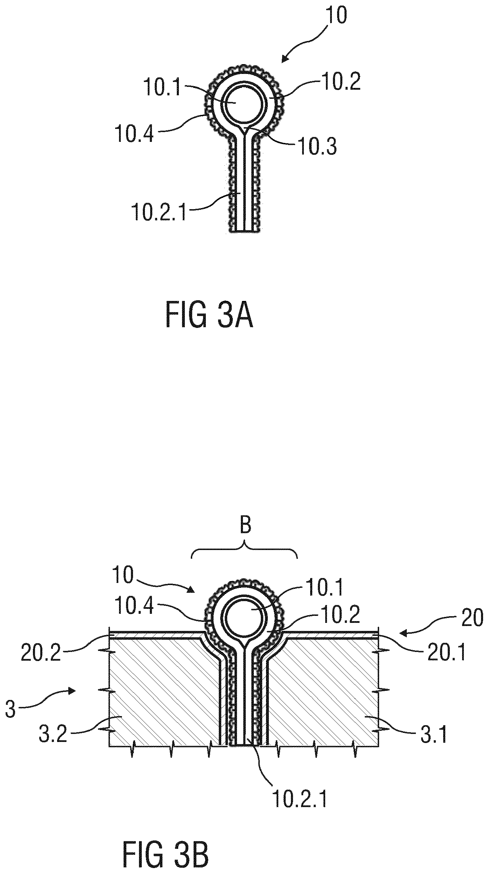

**Figur 3A** zeigt schematisch ein Ausführungsbeispiel der Erfindung für einen Keder 10. Der Keder 10 weist eine Kederseele 10.1 auf, die von einem Bezugsmaterial 10.2 umgeben ist. Das Bezugsmaterial 10.2 ist wiederum von einem Befestigungsmaterial 10.4, insbesondere einem Klettmaterial umgeben, insbesondere ummantelt. Zur besseren Übersicht wird nachfolgend das Befestigungsmaterial 10.4 als Klettmaterial 10.4 bezeichnet.

Die Kederseele 10.1 ist aus einem elastischen Material, insbesondere aus Kunststoff oder Gummi. Das Bezugsmaterial 10.2 ist aus Kunststoff, zum Beispiel Polypropylen, oder einem Naturmaterial, wie zum Beispiel Leder oder Stoff. Das Bezugsmaterial 10.2 ist insbesondere fester als die Kederseele 10.1 ausgebildet.

Je nach Art und Form des Klettmaterials 10.4 kann das Bezugsmaterial 10.2 entfallen und das Klettmaterial 10.4 direkt die Kederseele 10.1 ummanteln und eine Aufnahme 10.3 für die Kederseele 10.1 aufweisen. Das Klettmaterial 10.4 kann als ein Klettband oder Klettware (= Breitware) ausgebildet sein. Es kann ein- oder beidseitig selbstklebend ausgebildet sein. Bevorzugt ist das auf den Keder 10 aufgebrachte Klettmaterial 10.4 ein Hakenmaterial, insbesondere ein Haken-, Pilzkopf- oder Ösen-Band/-Ware. Alternativ kann auf den Keder 10 als Klettmaterial 10.4 ein Haft- oder Flauschmaterial, insbesondere ein Haft- oder Flausch-Band oder eine Haft- oder Flausch-Ware, aufgebracht sein. Das Klettmaterial 10.4 ist stoffschlüssig am Keder 10 befestigt, insbesondere geklebt oder geschweißt.

**Figuren 3B-3C** zeigen schematisch verschiedene Ausführungsbeispiele der Erfindung mit einem Sitzbezug 20 mit einem Keder 10.

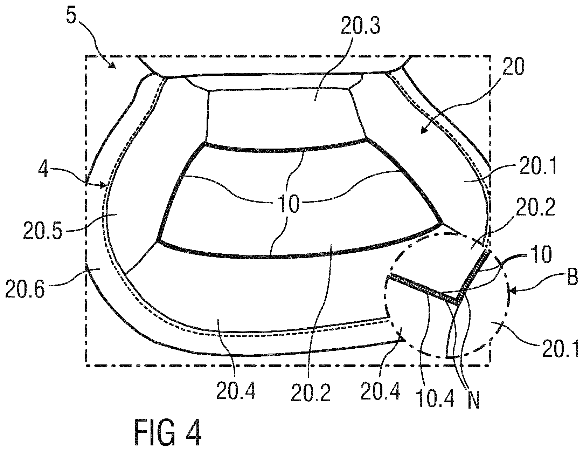

Der Sitzbezug 20 umfasst mehrere Bezugsteile 20.1, 20.2. Die Bezugsteile 20.1, 20.2 sind fest an einem Träger 3 eines Sitzes 5 (siehe Figur 4) befestigt, beispielsweise kaschiert. Mit anderen Worten: Die Bezugsteile 20.1, 20.2 sind in Form von Kaschierungen auf den Träger 3 oder dessen Trägerteile 3.1, 3.2 aufgebracht.

Im Übergangsbereich B von mindestens zwei miteinander verbundenen Bezugsteilen 20.1, 20.2 ist der Keder 10 vorgesehen. Somit ist der Keder 10 in den Sitzbezug 20 integriert. Der Keder 10 ist mit einem Klettmaterial 10.4 ummantelt, das von der Oberfläche des Sitzbezuges 20, insbesondere einer Kaschierung, nach außen ragt.

In **Figur 3B** ist der Keder 10 vollständig vom Klettmaterial 10.4 ummantelt, auch im Bereich der Kederfahnen 10.2.1. Hierdurch kann der Keder 10 einfach zwischen den beiden Bezugsteilen 20.1, 20.2 befestigt werden.

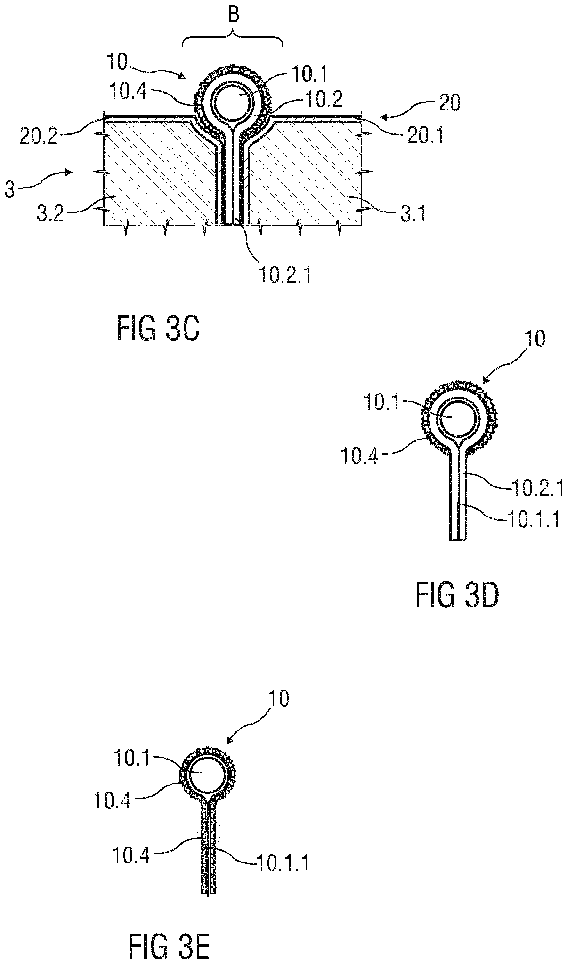

Alternativ kann der Keder 10, wie in **Figur 3C** gezeigt, nur im äußeren Bereich des Keders 10, d. h. nur im die Kederseele 10.1 umgebenden äußeren Bereich, mit Klettmaterial 10.4 versehen sein. In diesem Fall werden die Kederfahnen 10.2.1 anderweitig am Sitzbezug 20 befestigt, beispielsweise genäht, geklebt, geschweißt. Je nach Art und Form des Klettmaterials 10.4 kann das Bezugsmaterial 10.2 entfallen und das Klettmaterial 10.4 direkt die Kederseele 10.1 ummanteln und eine Aufnahme 10.3 für die Kederseele 10.1 aufweisen, wie in **Figur 3E** gezeigt. Dabei dient eine Seelenfahne 10.1.1 zur Befestigung und ist durch das Klettmaterial 10.4 gebildet.

**Figur 3D** zeigt eine Ausführungsform eines Keders 10, wie sie in Figur 3C verwendet wird.

**Figur 4** zeigt schematisch eine Draufsicht auf einen unteren Sitzbezug 20 für ein Sitzteil 4 eines Sitzes 5 mit einer vergrößerten Darstellung eines Übergangsbereiches B zwischen angrenzenden Bezugsteilen 20.1, 20.2, 20.4. Der untere Sitzbezug 20 weist mehrere Bezugsteile 20.1 bis 20.6 auf. Im Übergangsbereich B zwischen zumindest zwei angrenzenden Bezugsteilen 20.1 und 20.2, 20.2 und 20.3, 20.2 und 20.5 und/oder zwischen 20.2 und 20.4 ist der Keder 10 vorgesehen. Dabei kann der Keder 10 nur abschnittsweise zwischen den Bezugsteilen 20.1 bis 20.6 angeordnet sein. Alternativ oder zusätzlich kann sich der Keder 10 über die gesamte Länge im Übergangsbereich B zweier angrenzender Bezugsteile 20.1 bis 20.6 erstrecken. Dabei ist der Keder 10 zwischen mindestens zwei der Bezugsteile 20.1 bis 20.6 derart angeordnet, wie dies beispielhaft in der Figur 3B oder 3C gezeigt ist, dass die Kederseele 10.1 oberflächenseitig beispielsweise wulstförmig vom Sitzbezug 20 absteht. Mit anderen Worten: Zumindest die mit zumindest dem Klettmaterial 10.4 ummantelte Kederseele 10.1 steht im Übergangsbereich B, insbesondere zumindest bereichsweise entlang einer Naht N zwischen zwei miteinander verbundenen Bezugsteilen 20.1 bis 20.6 von dieser Naht N ab. Da nur die Kederseele 10.1 in Art eines aus der Naht N herausragenden Kopfes im Übergangsbereich B vom Sitzbezug 20 absteht, bildet die Kederseele 10.1 einen abstehenden Wulst, so dass ein auf dem Sitzbezug 20 zu befestigendes Teil, zum Beispiel eine anderer Sitzbezug 6 einfach und sicher am Klettmaterial 10.4 anhaften kann.

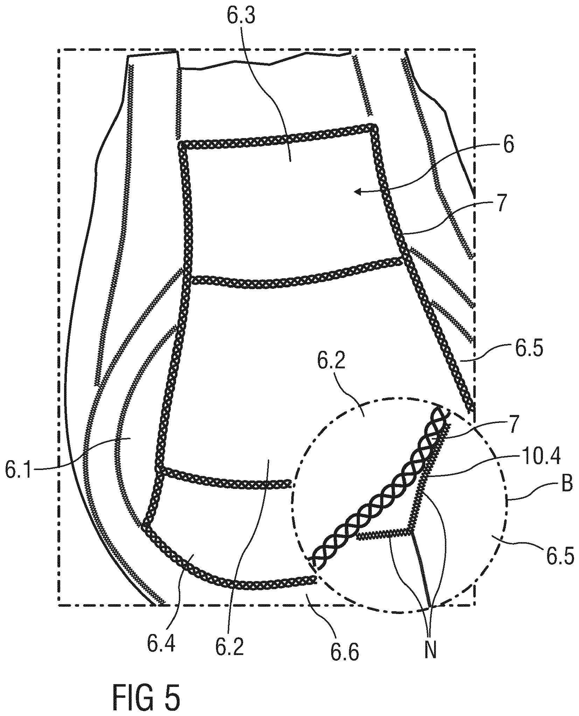

Der in **Figur 4** dargestellte Sitzbezug 20 ist ein unterer Sitzbezug für eine Sitzfläche oder ein Sitzteil 4 des Sitzes 5. An diesem unteren Sitzbezug 20, insbesondere einem Sitzpolster, kann ein oberer Sitzbezug 6, der in **Figur 5** dargestellt ist, lösbar befestigt werden. Mit anderen Worten: Der obere Sitzbezug 6 ist auf dem unteren Sitzbezug 20 lösbar befestigbar.

Zur lösbaren Befestigung des oberen Sitzbezugs 6 am unteren Sitzbezug 20 ist der obere Sitzbezug 6 mit einem Haltematerial 7, insbesondere einem Flauschmaterial, versehen. Somit sind die beiden Sitzbezüge 6, 20 über eine Klettverbindung zwischen dem Klettmaterial 10.4 des Keders 10 im unteren Sitzbezug 20 und dem Haltematerial 7 des oberen Sitzbezugs 6 zumindest bereichsweise entlang der Naht N miteinander lösbar verbindbar.

Das Klettmaterial 10.4 und das Haltematerial 7 sind aneinander gegenüberliegenden Stellen der Sitzbezüge 6, 20 angeordnet. Somit tritt das Klettmaterial 10.4 des Keders 10 und das Haltematerial 7 des oberen Sitzbezuges 6 in Kontakt miteinander und greifen im verbundenen Zustand ineinander ein. Durch Auseinanderziehen, insbesondere Abziehen des oberen Sitzbezugs 6 vom unteren am Sitzteil 4 fest gehaltenen Sitzbezuges 20 sind beide Sitzbezüge 6, 20 voneinander trennbar.

Beide Sitzbezüge 20 und 6 sind beispielsweise korrespondierend zueinander ausgebildet und weisen eine korrespondierende Anzahl von Bezugsteilen 20.1 bis 20.6 bzw. 6.1 bis 6.6 auf.

Im Übergangsbereich B, insbesondere im Nahtbereich, zwischen angrenzenden Bezugsteilen 6.1 bis 6.6 weist der abnehmbare obere Sitzbezug 6 das Haltematerial 7 auf. Analog dazu weist der untere Sitzbezug 20 in diesem Nahtbereich den Keder 10 mit dem nach außen weisenden Klettmaterial 10.4 auf.

Somit ist der Keder 10 des unteren Sitzbezugs 20 als ein Befestigungs- und/oder Randverstärkungskeder ausgebildet. Ein solcher als Befestigungskeder, insbesondere sogenannter Klettkeder, ausgebildeter Keder 10 zur Befestigung des oberen Sitzbezugs 6 an dem Sitz 5, insbesondere an dessen unterem Sitzbezug 20, ermöglicht einen aufgeräumten und komfortablen Eindruck. Hierdurch ist ein optisch verbesserter, insbesondere faltenfreier Sitzbezug 20, 6 mit gleichzeitig lösbarer Befestigung gegeben.

### Bezugszeichenliste

- 1,10: Keder
- 1.1, 10.1: Kederseele
- 10.1.1.: Seelenfahne
- 1.2, 10.2: Bezugsmaterial
- 1.2.1, 10.2.1: Kederfahne
- 1.3, 10.3: Kederaufnahme
- 10.4: Befestigungsmaterial, Klettmaterial
- 2, 20: (unterer) Sitzbezug
- 2.1-2.3, 20.1-20.6: Bezugsteile
- 3: Träger
- 3.1, 3.2: Trägerteile
- 4: Sitzteil
- 5: Sitz
- 6: (oberer) Sitzbezug
- 6.1 bis 6.6: Bezugsteile
- 7: Haltematerial
- V: Verbindungsmittel
- B: Übergangsbereich
- N: Naht

## Patentansprüche

1. Sitz (5), insbesondere Fahrzeugsitz, umfassend
- ein Sitzpolster,
- einen am Sitzpolster befestigten unteren Sitzbezug (20),
- einen oberen Sitzbezug (6), welcher auf dem unteren Sitzbezug (20) lösbar befestigbar ist,
- wobei einer der Sitzbezüge (6, 20) mit zumindest einem Keder (10) versehen ist
- wobei der Keder (10) eine Kederseele (10.1) umfasst, die von einem Befestigungsmaterial (10.4) umgeben ist, und
- wobei der andere Sitzbezug (6, 20) mit einem Haltematerial (7) versehen ist, in welches das Befestigungsmaterial (10.4) des Keders (10) im verbundenen Zustand haltend eingreift.

2. Sitz (5) nach Anspruch 1, wobei die Kederseele (10.1) von dem Befestigungsmaterial (10.4) ummantelt ist.

3. Sitz (5) nach Anspruch 1 oder 2, wobei das Befestigungsmaterial (10.4) als ein Klettmaterial (10.4) ausgebildet ist.

4. Sitz (5) nach Anspruch 3, wobei das Klettmaterial (10.4) ein Hakenmaterial ist.

5. Sitz (5) nach einem der vorhergehenden Ansprüche, wobei das Befestigungsmaterial (10.4) stoffschlüssig mit der Kederseele (10.1) verbunden ist.

6. Sitz (5) nach einem der Ansprüche 1 bis 4, wobei zwischen dem Befestigungsmaterial (10.4) und der Kederseele (10.1) ein Bezugsmaterial (10.2) angeordnet ist.

7. Sitz (5) nach einem der vorhergehenden Ansprüche, wobei die Kederseele (10.1) aus einem elastischen Material, insbesondere aus Kunststoff oder Gummi, gebildet ist.

8. Sitz (5) nach Anspruch 6 oder 7, wobei das Bezugsmaterial (10.2) aus Kunststoff, Leder oder einem Gewebe gebildet ist.

9. Sitz (5) nach einem der vorhergehenden Ansprüche, wobei das Befestigungsmaterial (10.4) aus Kunststoff gebildet ist.

10. Sitz (5) nach einem der vorhergehenden Ansprüche, wobei
- der Sitzbezug (6, 20) eine Mehrzahl von Bezugsteilen (6.1 bis 6.6) aufweist, und
- im Bereich von mindestens zwei miteinander verbundenen Bezugsteilen (6.1 bis 6.6) wenigstens ein Keder (10) vorgesehen ist.

11. Sitz (5) nach einem der vorhergehenden Ansprüche, wobei das Haltematerial (7) ein Flauschmaterial ist.

## Claims

1. Seat (5), in particular vehicle seat, comprising
- a seat cushion,
- a lower seat cover (20) fastened to the seat cushion,
- an upper seat cover (6) which is able to be releasably fastened to the lower seat cover (20),
- wherein one of the seat covers (6, 20) is provided with at least one edge strip (10)
- wherein the edge strip (10) comprises an edge strip core (10.1) which is surrounded by a fastening material (10.4), and
- wherein the other seat cover (6, 20) is provided with a retaining material (7) into which the fastening material (10.4) of the edge strip (10) engages in a retaining manner in the connected state.

2. Seat (5) according to Claim 1, wherein the edge strip core (10.1) is encased by the fastening material (10.4).

3. Seat (5) according to Claim 1 or 2, wherein the fastening material (10.4) is configured as a hook and loop material (10.4).

4. Seat (5) according to Claim 3, wherein the hook and loop material (10.4) is a hook material.

5. Seat (5) according to one of the preceding claims, wherein the fastening material (10.4) is connected by a material bond to the edge strip core (10.1).

6. Seat (5) according to one of Claims 1 to 4, wherein a cover material (10.2) is arranged between the fastening material (10.4) and the edge strip core (10.1).

7. Seat (5) according to one of the preceding claims, wherein the edge strip core (10.1) is formed from a resilient material, in particular from plastics or rubber.

8. Seat (5) according to Claim 6 or 7, wherein the cover material (10.2) is formed from plastics, leather or a woven fabric.

9. Seat (5) according to one of the preceding claims, wherein the fastening material (10.4) is formed from plastics.

10. Seat (5) according to one of the preceding claims, wherein
- the seat cover (6, 20) comprises a plurality of cover parts (6.1 to 6.6), and
- at least one edge strip (10) is provided in the region of at least two cover parts (6.1 to 6.6) connected together.

11. Seat (5) according to one of the preceding claims, wherein the retaining material (7) is a fleece material.

## Revendications

1. Siège (5), en particulier siège de véhicule, comprenant
- un coussin de siège,
- une garniture de siège inférieure (20) fixée au coussin de siège,
- une garniture de siège supérieure (6) qui peut être fixée de manière amovible à la garniture de siège inférieure (20),
- l'une des garnitures de siège (6, 20) étant pourvue d'au moins un bourrelet (10)
- le bourrelet (10) comprenant un noyau de bourrelet (10.1) qui est entouré par un matériau de fixation (10.4), et
- l'autre garniture de siège (6, 20) étant pourvue d'un matériau de retenue (7) dans lequel le matériau de fixation (10.4) du bourrelet (10) s'engage en étant maintenu à l'état relié.

2. Siège (5) selon la revendication 1, le noyau de bourrelet (10.1) étant enveloppé par le matériau de fixation (10.4).

3. Siège (5) selon la revendication 1 ou 2, le matériau de fixation (10.4) étant réalisé sous la forme d'un matériau auto-agrippant (10.4).

4. Siège (5) selon la revendication 3, le matériau auto-agrippant (10.4) étant un matériau à crochets.

5. Siège (5) selon l'une des revendications précédentes, le matériau de fixation (10.4) étant relié au noyau de bourrelet (10.1) par liaison de matière.

6. Siège (5) selon l'une des revendications 1 à 4, un matériau de garniture (10.2) étant disposé entre le matériau de fixation (10.4) et le noyau de bourrelet (10.1) .

7. Siège (5) selon l'une des revendications précédentes, le noyau de bourrelet (10.1) étant réalisé en matériau élastique, notamment en matière synthétique ou en caoutchouc.

8. Siège (5) selon la revendication 6 ou 7, le matériau de garniture (10.2) étant formé à partir de matière synthétique, de cuir ou d'un tissu.

9. Siège (5) selon l'une des revendications précédentes, le matériau de fixation (10.4) étant formé à partir d'une matière synthétique.

10. Siège (5) selon l'une des revendications précédentes,
- la garniture de siège (6, 20) comportant une pluralité de pièces de garniture (6.1 à 6.6), et
- au moins un bourrelet (10) étant prévu dans la zone d'au moins deux pièces de garniture (6.1 à 6.6) reliées entre elles.

11. Siège (5) selon l'une des revendications précédentes, le matériau de retenue (7) étant un matériau polaire.
